# EUROPÄISCHE PATENTSCHRIFT

(11) **EP 1 237 805 B1**
(45) Veröffentlichungstag und Bekanntmachung des Hinweises auf die Patenterteilung: **19.05.2004**
(21) Anmeldenummer: 00993400.1
(22) Anmeldetag: 12.12.2000
(51) Int. Cl.: B65H 5/00

(54) **VORRICHTUNG ZUM ABLENKEN EINES SCHUPPENSTROMS AUF EINEM ROLLENTISCH**
DEVICE FOR DEVIATING AN OVERLAPPING STREAM ON A ROLLER TABLE
DISPOSITIF PERMETTANT DE DEVIER UN COURANT LAMELLAIRE SUR UNE TABLE A ROULEAUX

(30) Priorität: 14.12.1999 DE 19960347
(43) Veröffentlichungstag der Anmeldung: 11.09.2002
(73) Patentinhaber: Palamides GmbH, 71272 Renningen (DE)
(72) Erfinder: PALAMIDES, Stefano, 71263 Merklingen (DE); PFEIFFER, Wolfgang, 70567 Stuttgart (DE); OLDENKOTT, Johannes, 71263 Hausen (DE); GASSER, Marcus, 74321 Bietigheim-Bissingen (DE)
(74) Vertreter: Weller, Wolfgang, Dr.
(86) Internationale Anmeldenummer: PCT/EP2000/012572
(87) Internationale Veröffentlichungsnummer: WO 2001/044090

(56) Entgegenhaltungen:
- WO-A-94/13566
- DE-A- 3 926 608
- FR-A- 2 743 549
- GB-A- 2 080 754
- US-A- 2 528 106
- PATENT ABSTRACTS OF JAPAN vol. 016, no. 339 (M-1284), 22. Juli 1992 (1992-07-22) -& JP 04 101912 A (TOTO LTD), 3. April 1992 (1992-04-03)

## Beschreibung

Die Erfindung betrifft eine Vorrichtung zum Ablenken eines Schuppenstroms auf einem Rollentisch, der mehrere hintereinander angeordnete Rollen zum Transport des Schuppenstroms aufweist.

Derartige Rollentische werden insbesondere in Druckereien zum Transport von Schuppenströmen eingesetzt. Als Schuppenstrom wird eine Anzahl von flachen und relativ biegsamen Druckereierzeugnissen, wie bspw. Zeitungen, Prospekte oder Zeitschriften, bezeichnet, die hintereinander ausgerichtet sind und sich dabei schuppenartig teilweise überlappen. Bislang werden Rollentische dazu verwendet, Schuppenströme quer zur Längsrichtung der Rollen zu transportieren. Häufig jedoch besteht die Notwendigkeit, Schuppenströme umzulenken oder die Richtung eines Schuppenstroms bedarfsabhängig zu ändern.

Mit Hilfe spezieller Rollentische ist es möglich, Schuppenströme auch auf gekrümmten Bahnen zu transportieren. Diese speziellen Rollentische weisen zu diesem Zweck konisch geformte Rollen auf, die entlang einer gekrümmten Bahn hintereinander angeordnet sind. Die Bahn ist bei diesen Rollentischen jedoch durch die Anordnung der Rollen fest vorgegeben.

Bei einer anderen bekannten Vorrichtung wird der Schuppenstrom auf breiten Riemen transportiert, die zwischen zwei Umlenkwalzen umlaufen. Die Riemen können auf den Umlenkwalzen in verschiedenen Positionen aufgezogen werden, so daß die Richtung des Schuppenstroms durch Umsetzen der Riemen auf den Umlenkwalzen geändert werden kann. Eine Richtungsänderung erfordert hier jedoch stets eine Unterbrechung des Betriebs.

Bekannt sind außerdem Rollentische zum Transport von festeren Gegenständen, wie bspw. Pappschachteln, bei denen über den Rollen Ablenkbleche angeordnet sind, die die Gegenstände in seitlicher Richtung auf dem Rollentisch ablenken. Zum Ablenken von Schuppenströme sind diese Bleche ungeeignet, da diese aufgrund ihrer geringen Stärke und ihrer Biegsamkeit dazu neigen, unter den Ablenkblechen wegzutauchen und sich dabei in dem Spalt zwischen Rollen und Ablenkblech festzuklemmen.

Aus dem Dokument DE-A-39 26 608 ist ein Förder- und Ausrichtetisch für Bögen aus Papier bekannt, der mehrere hintereinander angeordnete zylindrische Rollen zum Transport der Bögen aufweist, wobei eine Leiste, deren Lage innerhalb einer Schiebeebene veränderbar ist, vorgesehen ist, die zu der durch die Anordnung der Rollen festgelegten Transportebene parallel ist, und es sind Führungselemente vorgesehen, die als Führung für die auf den Rollen transportierten Bögen dienen.

Aufgabe der Erfindung ist es, eine Vorrichtung zum Ablenken eines Schuppenstroms auf einem Rollentisch anzugeben, die es ermöglicht, auch vergleichsweise biegsame Schuppenströme auf einem solchen Rollentisch abzulenken. Die Ablenkrichtung soll dabei in vorgegebenen Grenzen frei wählbar sein.

Diese Aufgabe wird durch eine Vorrichtung gelöst, die eine Leiste, deren Lage innerhalb einer Schiebeebene, die zu der durch die Anordnung der Rollen festgelegten Transportebene parallel ist, veränderbar ist, und Führungselemente aufweist, die als Führung für den auf den Rollen transportierten Schuppenstrom dienen, die ferner an der Leiste in der zur Schiebeebene senkrechten Richtung relativ zur Leiste drehbar und die in Längsrichtung der Leiste verschiebbar aufgenommen sind und jeweils in den zwischen zwei Rollen gebildeten Zwischenraum hinein reichen.

Durch die in den Zwischenraum zwischen zwei Rollen hinreichenden Führungselemente wird wirkungsvoll verhindert, daß zwischen den Rollen und den Führungselementen ein solcher Spalt ausgebildet ist, in dem der Schuppenstrom sich verklemmen kann. Diese Neigung des Schuppenstroms, sich bei einer Bewegung schräg zur durch die Rotation der Rollen vorgegebenen Transportrichtung zu verklemmen, hängt mit der geringen Dicke und der vergleichsweise großen Biegsamkeit der Druckerzeugnisse zusammen.

Da die Führungselemente in der zur Schiebeeben senkrechten Richtung drehbar und in Längsrichtung der Leiste verschiebbar an dieser befestigt sind, kann die Ablenkrichtung, zumindest in vorgegebenen Grenzen, beliebig verändert werden, und zwar nicht nur im Sinne einer wählbaren Ablenkung nach links oder rechts, sondern auch im Winkelmaß der Ablenkung. Die Führungselemente führen bei einer Richtungsänderung der Leiste lediglich eine Bewegung in Längsrichtung der Rollen aus, so daß der Zwischenraum zwischen den Rollen weiterhin durch die Führungselemente ausgefüllt bleibt.

Bei einer bevorzugten Ausgestaltung der Erfindung weisen die Führungselemente an ihrer zu den Rollen weisenden Unterseite jeweils zwei einander gegenüberliegende teilzylindrische Ausnehmungen auf, deren Kontur etwa der Außenfläche der Rollen entspricht.

Auf diese Weise verbleibt zwischen den Rollen und den Führungselementen nur noch ein minimaler Spalt, der notwendig ist, um eine Drehbewegung der Rollen unter den Führungselementen zu ermöglichen. Dadurch ist es praktisch ausgeschlossen, daß ein von der Vorrichtung geführter Schuppenstrom sich zwischen den Führungselementen und den Rollen oder auch zwischen den Rollen verklemmt.

Bei einer anderen vorteilhaften Ausgestaltung der Erfindung weist die Leiste zwei parallele, zueinander beabstandete Streben auf. In den zwischen den Streben gebildeten Zwischenraum greifen Zapfen ein, die jeweils an der von den Rollen weg weisenden Oberseite der Führungselemente befestigt sind.

Diese Ausgestaltung erlaubt auf konstruktiv besonders einfache Weise eine Drehbarkeit der Führungselemente in der zur Schiebeebene senkrechten Richtung und eine Verschiebbarkeit in Längsrichtung der Leiste.

Bei einer anderen vorteilhaften Ausgestaltung der Erfindung sind zumindest einige Führungselemente jeweils mit einer Andrückeinrichtung versehen, mit der ein von der Vorrichtung abgelenkter Schuppenstrom von oben gegen die Rollen andrückbar ist.

Eine derartige Andrückeinrichtung ist insbesondere dann vorteilhaft, wenn der Schuppenstrom aus besonders leichten Drukkerzeugnissen besteht. Die Andrückeinrichtungen stellt in diesem Fall sicher, daß die Reibung zwischen den Rollen und dem Schuppenstrom ausreicht, um den Schuppenstrom in der gewünschten Weise anzutreiben.

In einer vorteilhaften Weiterbildung dieser Ausgestaltung ist die Andrückeinrichtung als Kugel ausgeführt, die von einem mit dem Führungselement verbundenen Ring gehalten wird, so daß die Kugel in vertikaler Richtung beweglich ist. Die zum Andrücken erforderliche Kraft wird dabei vom Eigengewicht der Kugel erzeugt. Da die Kugel sich in dem Ring drehen kann, ist die Reibung zwischen Andrückeinrichtung und dem Schuppenstrom minimal.

Bei einer weiteren vorteilhaften Ausgestaltung der Erfindung ist am vorderen und hinteren Ende des Rollentischs parallel zu den Rollen jeweils eine Klemmschiene angeordnet, an die die Leiste mit Hilfe von Klemmschrauben lösbar befestigt ist.

Diese Aüsgestaltung ermöglicht in konstruktiv besonders einfacher weise, die Lage der Leiste in der Schiebeebene zu verändern. Hierzu ist die Leiste nämlich lediglich nach dem Lösen der Klemmschrauben in anderer Orientierung zwischen den beiden Klemmschienen durch Anziehen der Klemmschrauben zu befestigen.

Außerdem ermöglicht es diese Ausführung, mehrere Leisten in der geschilderten Weise über dem Rollentisch anzuordnen, ohne daß hierfür jeweils gesonderte Verstellmittel vorzusehen sind.

Bei einer anderen vorteilhaften Ausgestaltung der Erfindung sind die Führungselemente in der durch die Rollen vorgegebenen Transportrichtung durch zwei zueinander parallel angeordnete ebene Gleitflächen begrenzt und so entlang der Leiste angeordnet, daß sich unabhängig von der Lage der Leiste jeweils zwei benachbarte Führungselemente entlang ihrer Gleitflächen berühren. Dadurch bilden die Führungselemente unabhängig von der Lage der Leiste eine durchgehende Führung für den Schuppenstrom, wodurch ein Abtauchen des Schuppenstroms unter oder zwischen die Führungselemente verhindert wird.

Weitere Vorteile und Merkmale der Erfindung ergeben sich aus den Ausführungsbeispielen, die nachfolgend anhand der Figuren erläutert werden. Es zeigen:
- Fig. 1: eine Draufsicht auf einen Rollentisch mit einer erfindungsgemäßen Vorrichtung;
- Fig. 2: eine vergrößerte Darstellung einer Draufsicht auf einen Teil des Rollentischs, wobei Führungselemente mit Andrückeinrichtungen versehen sind;
- Fig. 3: eine perspektivische Darstellung eines Führungselementes mit Andrückeinrichtung, jedoch ohne Kugel;
- Fig. 4: einen Schnitt längs der Linie IV-IV von Fig. 2, jedoch mit schon weiter vortransportiertem Schuppenstrom;
- Fig. 5: ein der Fig. 4 entsprechender Schnitt, wobei die Führungselemente keine Andrückeinrichtungen aufweisen.

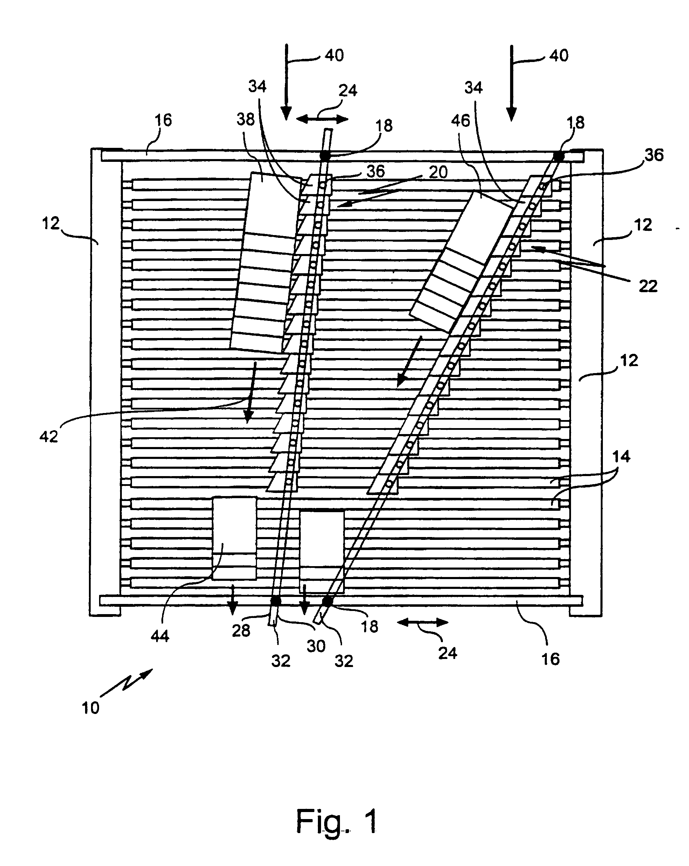

Der in Fig. 1 dargestellte Rollentisch ist insgesamt mit der Bezugsziffer 10 bezeichnet und weist zu beiden Seiten jeweils Halterungen 12 auf, zwischen denen Rollen 14 hintereinander angeordnet sind. Die Rollen 14 haben einen Edelstahlmantel und sind im dargestellten Ausführungsbeispiel von einer in Fig. 1 nicht näher dargestellten Antriebseinheit angetrieben. Die Rollen 14 können jedoch auch ebensogut nicht oder nur teilweise angetrieben sein. Außerdem ist es möglich, den Rollentisch 10 geneigt aufzubauen, so daß ein zu transportierender Schuppenstrom allein durch den Einfluß der Schwerkraft sich über die Rollen 10 hinweg bewegt und diese dabei in Rotation versetzt.

Am oberen und am unteren Ende des Rollentischs 10 verlaufen parallel zu den Rollen 14 Klemmschienen 16, die an ihren Enden jeweils an den Halterungen 12 befestigt sind. Auf den Klemmschienen 16 sind mit Hilfe von Klemmschrauben 18 zwei Ablenkvorrichtungen 20 und 22 so befestigt, daß nach Lösen der Klemmschrauben 18 die Lage der Ablenkvorrichtungen 20 und 22 über dem Rollentisch 10 verändert werden kann. Hierzu werden die Enden der Ablenkvorrichtungen 20 und 22 in der durch die Pfeile 24 angedeuteten Richtung längs über den Klemmschienen 16 verschoben und an der gewünschten Position wieder durch Anziehen der Klemmschrauben 18 befestigt.

Die Ablenkvorrichtung 20 besteht im wesentlichen aus einer aus zwei Streben 28 und 30 zusammengesetzten Leiste 32 sowie einer Anzahl von daran gehaltenen Führungselementen 34. Die Führungselemente 34 sind an ihrer zum Betrachter hin gewandten Oberseite jeweils mit einem Zapfen 36 versehen, der in den von den Streben 28 und 30 gebildeten Zwischenraum hineinreicht. Dadurch können sich die Führungselemente 34 senkrecht zu der durch die Anordnung der Rollen 14 festgelegten Ebene drehen. Außerdem sind sie entlang der Leiste 32 verschiebbar. Mit ihrer Unterseite liegen die Führungselemente 34 auf den Rollen 14 auf. Die Leiste 32 hat somit lediglich eine Führungs-, jedoch keine Tragefunktion für die Führungselemente 34.

In Fig. 1 ist mit 38 ein Schuppenstrom bezeichnet, von dem angenommen sei, daß er zunächst in Richtung des Pfeiles 40 dem Rollentisch 10 zugeführt werde. Bei dieser Bewegung wird der vordere Rand des Schuppenstroms 38 irgendwann an das erste Führungselement 34 der Ablenkvorrichtung 20 anschlagen und dabei eine Ablenkung nach rechts, gesehen in Bewegungsrichtung 40, erfahren. Der Schuppenstrom 38 bewegt sich nunmehr in Richtung des Pfeiles 42 entlang der Ablenkvorrichtung 20 weiter. Da die Bewegungsrichtung 42 nun nicht mehr senkrecht zu den Rollen 14, sondern leicht schräg zur Senkrechten verläuft, wirkt auf den Schuppenstrom 38 ein Drehmoment, das den Schuppenstrom 38 wieder in seine ursprüngliche Bewegungsrichtung 40 zurückzudrehen versucht. Infolge dieses Drehmomentes nimmt der Schuppenstrom 38 wieder seine ursprüngliche Bewegungsrichtung 40 ein, nachdem er das letzte Führungselement 34 am Ende der Ablenkvorrichtung 20 passiert hat. Dies ist durch den Schuppenstrom 44 am unteren Ende des Rollentischs 10 angedeutet.

Die zweite Ablenkvorrichtung 22 ist genauso aufgebaut wie die Ablenkvorrichtung 20, jedoch in einer anderen Lage über dem Rollentisch 10 befestigt. Wie man in Fig. 1 gut erkennt, sind die Führungselemente 34 auch in dieser anderen Lage stets über den Rollen 14 angeordnet. Der Abstand zwischen den Zapfen 36 ist in dieser anderen Lage größer als bei der Ablenkvorrichtung 20. Außerdem ist der Winkel zwischen den Führungselementen 34 und der Leiste 32 bei der Ablenkvorrichtung 22 größer als bei der Ablenkvorrichtung 20. Die den Anschlag bildenden seitlichen Flächen der Führungselemente 34 fluchten in dieser Lage, so daß der Schuppenstrom 38 mit einer seitlichen Kante plan an diesen Flächen anliegt. Die Ablenkvorrichtung 22 befindet sich in ihrer Grenzposition, bei der der Winkel zwischen der Ablenkvorrichtung und der durch die Rollen 14 vorgegebenen Bewegungsrichtung 40 maximal ist. Bei einer noch größeren Schrägstellung der Leiste 32 würden sich die Führungselemente 34 so weit gegeneinander verschieben, daß Vorsprünge entständen, die die Bewegung des Schuppenstrom 46 aufhalten würden.

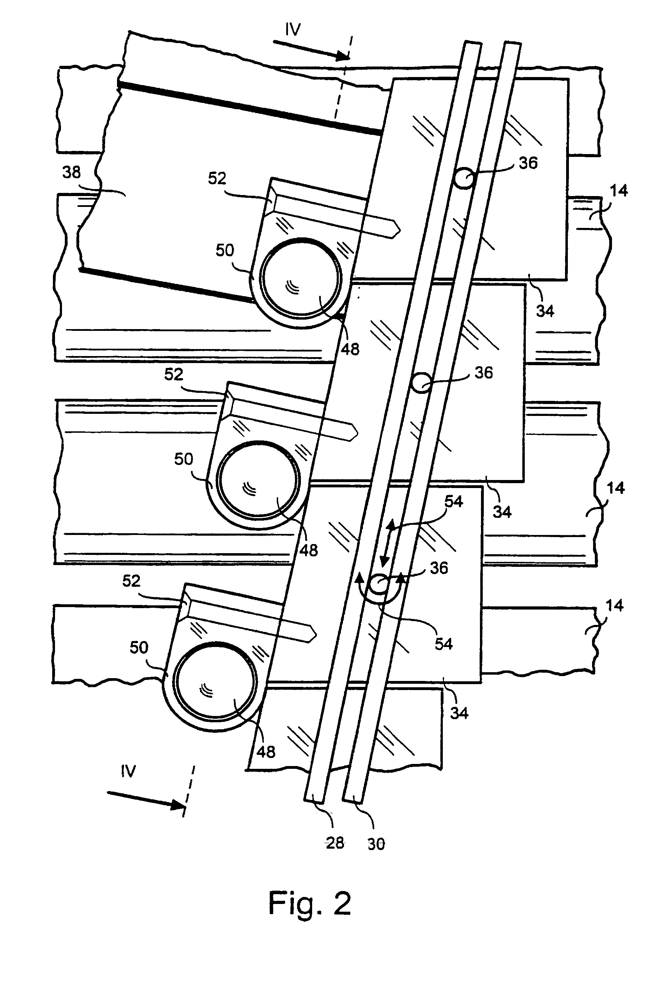

Fig. 2 zeigt in einer vergrößerten Darstellung einen Ausschnitt aus dem Rollentisch 10. Die Führungselemente 34 sind jeweils mit Andrückeinrichtungen versehen, die in Fig. 1 der Übersichtlichkeit halber nicht dargestellt sind. Die Andrückeinrichtungen umfassen Kugeln 48, die von Ringen 50 gehalten werden. Die Ringe 50 sind ihrerseits mit Hilfe von Schrauben 52 an den Führungselementen 34 befestigt. Die Kugeln 48 drücken aufgrund ihres Eigengewichts einen von den Führungselementen 34 geführten Schuppenstrom 38 von oben gegen die Rollen 14. Da sich die Kugeln 48 in dem Ring 50 in vertikaler Richtung bewegen können, läßt sich ein konstanter Anpreßdruck auch bei unterschiedlich dicken Schuppenströmen erzielen. Die Pfeile 54 in Fig. 2 deuten die Bewegungsmöglichkeiten an, die die Führungselemente 34 infolge der Führung der Zapfen 36 zwischen den Streben 28 und 30 haben.

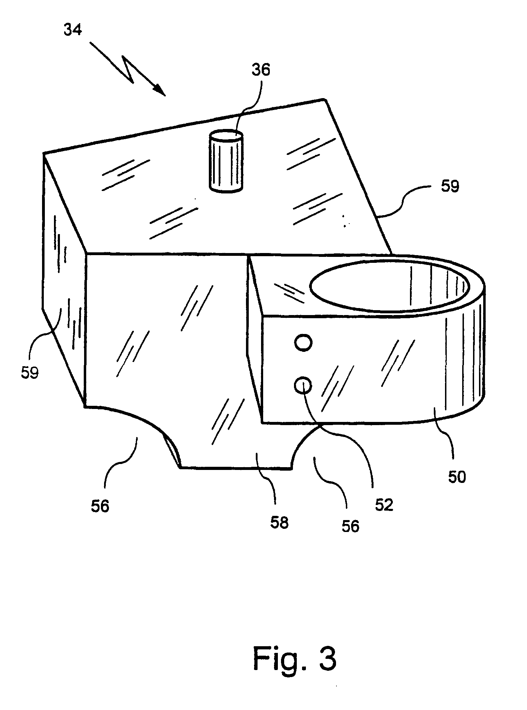

Fig. 3 zeigt ein Führungselement 34 mit Zapfen 36 und Ring 50 in einer perspektivischen Darstellung. An der Unterseite des Führungselements 34 liegen sich zwei teilzylindrische Ausnehmungen 56 gegenüber, zwischen denen ein Steg 58 verbleibt. Mit den durch die Ausnehmungen 56 gebildeten teilzylindrischen Flächen liegen die Führungselemente 34 auf den Rollen 14 auf, so daß die Stege 58 jeweils zwischen zwei benachbarte Rollen 14 hineinreichen. Die Führungselemente 34 sind so zueinander angeordnet, daß zwischen den beiden zueinander parallelen Seitenflächen 59 der Führungselemente 34 lediglich ein schmaler Spalt verbleibt, wie dies in Fig. 2 angedeutet ist. Die Führungselemente 34 können jedoch alternativ auch so dicht entlang der Leiste 32 angeordnet sein, daß die Seitenflächen 59 benachbarter Führungselemente 34 miteinander in gleitendem Kontakt stehen.

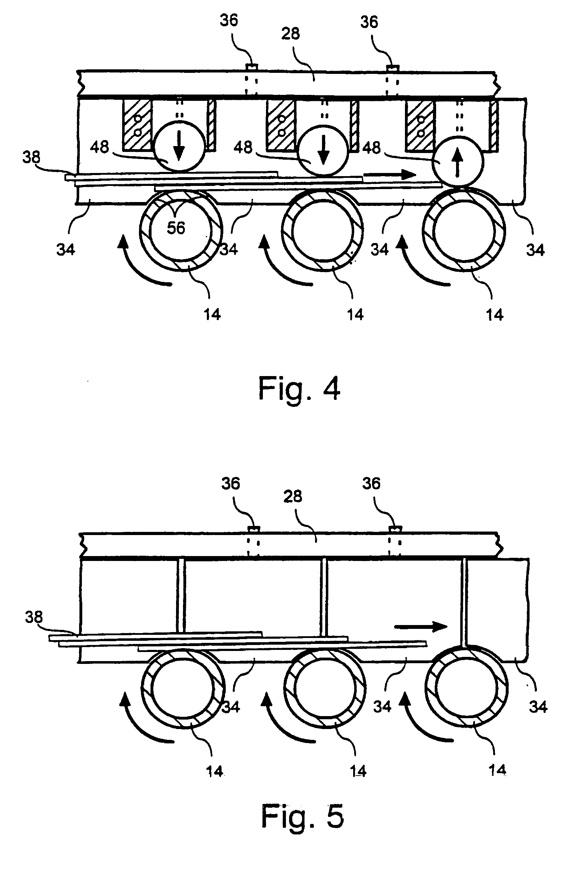

Dies ist in Fig. 4 in einem seitlichen Schnitt entlang der Linie IV-IV aus Fig. 2 gezeigt. Fig. 5 zeigt einen entsprechenden Schnitt, jedoch ohne die Andrückeinrichtung. In den Fig. 4 und 5 ist erkennbar, wie die Führungselemente 34 mit ihren teilzylindrischen Flächen im Bereich der Aussparungen 56 plan auf den Außenseiten der Rollen 14 aufliegen. Der Bereich zwischen den Aussparungen 56 reicht so tief zwischen zwei benachbarten Rollen hinein, daß dieser unterhalb der Unterseite des Schuppenstromes zum Liegen kommt. Um die Gleiteigenschaften der Führungselemente 34 auf den Rollen 14 zu verbessern, sind die Führungselemente 34 aus einem nylonartigen Kunststoff, z.B. POM, hergestellt.

Die Führungselemente 34 können in der Längsrichtung der Rollen 14, d.h. senkrecht zur Papierebene in Fig. 4 und 5, aneinander vorbeigleiten. In Fig. 4 ist erkennbar, wie der Schuppenstrom 38 von den Kugeln 48 nach unten gegen die Rollen 14 gedrückt wird. Ohne Schuppenstrom liegt jede Kugel 48 auf dem Scheitel der jeweiligen Rolle 14 auf. Dies ist ganz rechts in Fig. 4 dargestellt. Der Schuppenstrom 38 drückt selbsttätig die Kugeln 48 um die erforderliche Wegstrecke nach oben, so daß Schuppenströme unterschiedlicher Stärke mit gleichmäßigem Druck von den Kugeln 48 gegen die Rollen 14 gedrückt werden können.

Es versteht sich, daß das vorstehend beschriebene Ausführungsbeispiel in vielfältiger Weise abwandelbar ist. So können bspw. die Leisten 32 eine Krümmung aufweisen, die, in Transportrichtung gesehen, zunehmend größer wird. Dadurch läßt sich insbesondere dann, wenn eine große Ablenkung des Schuppenstromes erzielt werden soll, ein harter Anschlag am ersten Führungselement 34 vermeiden.

Bei weniger biegsamen Schuppenströmen ist außerdem denkbar, daß die Führungselemente 34 nicht unmittelbar auf den Rollen 14 aufliegen, sondern geringfügig darüber angeordnet sind. Dadurch werden Reibungsverluste infolge der Reibung zwischen den Rollen 14 und den Führungselementen 34 vermieden. Um die Führungselemente 34 an der Leiste 32 zu befestigen, kann in diesem Fall vorgesehen sein, in die Zapfen 36 von oben Tellerscheiben einzuschrauben, deren Ränder über die Streben 28 und 30 hinausragen. Dadurch sind die Führungselemente 34 an der Leiste 32 aufgehängt und können dennoch die erforderlichen Dreh- und Längsbewegungen ausführen. Zum Ändern der Ablenkrichtung wird zunächst die Leiste 32 abgesenkt, wodurch die Führungselemente 34 auf die Rollen 14 aufgesetzt werden. Bei einer nachfolgenden Lageänderung der Leiste 32 bleibt die Ausrichtung der Führungselemente 34 gegenüber den Rollen 14 erhalten. Anschließend wird die Leiste wieder angehoben.

Selbstverständlich kann die Lage der Leisten 32 auch auf elektromechanischem Wege verändert werden. Auf diese Weise lassen sich programmgesteuerte Sortierweichen aufbauen, mit denen Schuppenströme in unterschiedliche Richtungen aufgeteilt werden können.

## Patentansprüche

1. Vorrichtung (20, 22) zum Ablenken eines Schuppenstroms (38, 44, 46) auf einem Rollentisch (10), der mehrere hintereinander angeordnete zylindrische Rollen (14) zum Transport des Schuppenstroms (38, 44, 46) aufweist, wobei eine Leiste (32), deren Lage innerhalb einer Schiebeebene veränderbar ist, zu der durch die Anordnung der Rollen (14) festgelegten Transportebene parallel ist, und Führungselemente (34), aufweist die als Führung für den auf den Rollen (14) transportierten Schuppenstrom (38, 44, 46) dienen, **gekennzeichnet dadurch daß** die Führungselemente (34) an der Leiste (32) in der zur Schiebeebene senkrechten Richtung relativ zur Leiste (32) drehbar (54) und ferner in Längsrichtung der Leiste (32) verschiebbar (54) aufgenommen sind und jeweils in den zwischen zwei Rollen (14) gebildeten Zwischenraum hinein reichen.

2. Vorrichtung (20, 22) nach Anspruch 1, **dadurch gekennzeichnet, daß** die Führungselemente (34) an ihrer zu den Rollen (14) weisenden Unterseite jeweils zwei einander gegenüberliegende teilzylindrische Ausnehmungen (56) aufweisen, deren Kontur etwa der Außenfläche der Rollen (14) entspricht.

3. Vorrichtung (20, 22) nach einem der Ansprüche 1 oder 2, **dadurch gekennzeichnet, daß** die Leiste (32) zwei parallele, voneinander beabstandete Streben (28, 30) aufweist, und daß in den zwischen den Streben (28, 30) gebildeten Zwischenraum Zapfen (36) eingreifen, die jeweils von der von den Rollen (14) weg weisenden Oberseite der Führungselemente (34) abstehen.

4. Vorrichtung (20, 22) nach einem der Ansprüche 1 bis 3, **dadurch gekennzeichnet, daß** zumindest einige Führungselemente (34) jeweils mit einer Andrückeinrichtung (48, 50) versehen sind, mit der ein von der Vorrichtung abgelenkter Schuppenstrom (38, 44, 46) von oben gegen die Rollen (14) andrückbar ist.

5. Vorrichtung (20, 22) nach Anspruch 4, **dadurch gekennzeichnet, daß** die Andrückeinrichtung als Kugel (48) ausgeführt ist, die von einem mit dem Führungselement (34) verbundenen Ring (50) gehalten wird, so daß die Kugel (48) in vertikaler Richtung beweglich ist.

6. Vorrichtung (20, 22) nach einem der Ansprüche 1 bis 5, **dadurch gekennzeichnet, daß** am vorderen und hinteren Ende des Rollentischs (10) jeweils eine Klemmschiene (16) angeordnet ist, an die die Leiste (32) mit Hilfe von Klemmschrauben (18) lösbar befestigt ist.

7. Vorrichtung (20,22) nach einem der Ansprüche 1 bis 6, **dadurch gekennzeichnet, daß** die Führungselemente (34) in der durch die Rollen (14) vorgegebenen Transportrichtung durch zwei zueinander parallel angeordnete ebene Gleitflächen (59) begrenzt und so entlang der Leiste (32) angeordnet sind, daß sich unabhängig von der Lage der Leiste (32) jeweils zwei benachbarte Führungselemente (34) entlang ihrer Gleitflächen berühren.

8. Rollentisch mit einer Vorrichtung nach einem der Ansprüche 1 bis 7.

## Claims

1. Device (20, 22) for diverting an imbricated flow (38, 44, 46) on a roller table (10), which comprises a plurality of cylindrical rollers (14) arranged one behind the other for transporting the imbricated flow (38, 44, 46), wherein a bar (32), whose position can be varied within a sliding plane, extends in parallel to the transportation plane defined by the arrangement of the rollers (14), and is provided with guide elements (34) that serve as a guide for the imbricated flow (38, 44, 46), **characterized in that** the guide elements (34) at the bar (32) are rotatable (54) relative to the bar (32) in a direction perpendicular to the sliding plane, and are moveable in lengthwise direction of the bar, and that extend into a clearance between every two rollers (14).

2. Device (20, 22) of claim 1, **characterized in that** each of the guide elements (34) is provided at its lower surface, facing the rollers (14), with two oppositely arranged partially cylindrical recesses (56), the contour of which corresponds substantially to the outer surface of the rollers (14).

3. Device (20, 22) of claims 1 or 2, **characterized in that** the bar (32) comprises two parallel, mutually spaced braces (28, 30), and that the gap formed between the braces (28, 30) is engaged by journals (36) projecting from the upper surface of each of the guide elements (34) opposite the rollers (34).

4. Device (20, 22) of anyone of claims 1 through 3, **characterized in that** at least some of the guide elements (34) are each provided with pressure means (48, 50) by means of which an imbricated flow (38, 44, 46) being diverted by the device, can be pressed against the rollers (14) from above.

5. Device (20, 22) of claim 4, **characterized in that** the pressure means take the form of a ball (48) retained in a ring (50), which is connected with the guide element (34), so as to allow vertical movement of the ball (48).

6. Device (20, 22) of anyone of claims 1 through 5, **characterized in that** a clamping rail (16) is arranged on the most forward and the most rearward end of the roller table (10), respectively, on which the bar (32) is detachably mounted by means of clamping screws (18).

7. Device (20, 22) of anyone of claims 1 through 6, **characterized in that** the guide elements (34) are delimited, in the transport direction defined by the rollers (14), by two plane sliding surfaces (59), which are arranged parallel one to another, and are positioned along the bar (32) so as to ensure that, irrespective of the position of the bar (32), every two neighboring guide elements (34) are in contact one with the other along their sliding surfaces.

8. Roller table comprising a device according to any one of claims 1 to 7.

## Revendications

1. Dispositif (20, 22) permettant de dévier un courant lamellaire (38, 44, 46) sur une table à rouleaux (10), qui comprend plusieurs rouleaux (14), cylindriques disposés les uns derrière les autres pour le transport du courant lamellaire (38, 44, 46), une barre (32), dont la position peut être modifiée à l'intérieur d'un plan de glissement, étant parallèle au plan de transport déterminé par l'agencement des rouleaux (14), et comprenant des éléments de guidage (34), qui servent à guider le courant lamellaire (38, 44, 46) transporté sur les rouleaux (14), **caractérisé en ce que** les éléments de guidage (34) sont reçus de manière à pouvoir tourner (54) dans le sens perpendiculaire au plan de glissement par rapport à la barre (32) et à pouvoir se déplacer (54) en outre dans le sens longitudinal de la barre (32) et parviennent respectivement dans l'espace intermédiaire formé entre deux rouleaux (14).

2. Dispositif (20, 22) selon la revendication 1, **caractérisé en ce que** les éléments de guidage (34) comprennent sur leur côté inférieur orienté vers les rouleaux (14) respectivement deux évidements (56) en forme de cylindre partiel opposés l'un à l'autre, dont le contour correspond sensiblement à la surface extérieure des rouleaux (14).

3. Dispositif (20, 22) selon l'une des revendications 1 ou 2, **caractérisé en ce que** la barre (32) comprend deux membrures (28, 30) parallèles, écartées l'une de l'autre, et **en ce que** des tourillons (36), qui dépassent respectivement du côté supérieur des éléments de guidage (34) opposé aux rouleaux (14), s'engagent dans l'espace intermédiaire formé entre les membrures (28, 30).

4. Dispositif (20, 22) selon l'une des revendications 1 à 3, **caractérisé en ce qu'**au moins quelques éléments de guidage (34) sont dotés respectivement d'un dispositif de pression (48, 50), au moyen duquel un courant lamellaire (38, 44, 46) dévié par le dispositif peut être pressé depuis le haut contre les rouleaux (14).

5. Dispositif (20, 22) selon la revendication 4, **caractérisé en ce que** le dispositif de pression est réalisé sous la forme d'une bille (48), qui est maintenue par un anneau (50) relié à l'élément de guidage (34), de sorte que la bille (48) soit mobile dans le sens vertical.

6. Dispositif (20, 22) selon l'une des revendications 1 à 5, **caractérisé en ce que** sur l'extrémité avant et arrière de la table à rouleaux (10) est disposé respectivement un rail de serrage (16), sur lequel est fixée de manière détachable la barre (32), à l'aide de vis de serrage (18).

7. Dispositif (20, 22) selon l'une des revendications 1 à 6, **caractérisé en ce que** les éléments de guidage (34) sont délimités dans le dispositif de transport prédéfini par les rouleaux (14) par deux surfaces de glissement (59) planes disposées parallèlement l'une à l'autre et sont disposés ainsi le long de la barre (32), de sorte que respectivement deux éléments de guidage (34) voisins entrent en contact le long de leurs surfaces de glissement indépendamment de la position de la barre (32).

8. Table à rouleaux comprenant un dispositif selon l'une des revendications 1 à 7.
